# EUROPEAN PATENT APPLICATION

(11) **EP 4 752 594 A1**
(43) Date of publication of application: **03.06.2026**
(21) Application number: 25217595.5
(22) Date of filing: 21.11.2025
(51) Int. Cl.: G01S 7/41, G01S 13/931, G01S 13/95, G01S 7/00

(54) **DEVICE, METHOD AND COMPUTER PROGRAM FOR SENSING WEATHER CONDITION USING RADAR DEVICE INSTALLED IN VEHICLE**

(30) Priority: 28.11.2024 KR 20240173381
(71) Applicant: bitsensing Inc, Seongnam-si, Gyeonggi-do 13105 (KR)
(72) Inventor: HAN, Yu Min, 18439 Hwaseong-si, Gyeonggido (KR); CHAE, Young Hwan, 13105 Seongnam-si, Gyeonggi-do (KR); LEE, Sung Min, 13578 Seongnam-si, Gyeonggi-do (KR)
(74) Representative: BCKIP Part mbB

(57) **Abstract**

A device that senses weather conditions using a radar device (110) installed in a vehicle (100) includes a transceiver configured to: transmit, through the radar device, radar signals to an outside of the vehicle based on a first mode or a second mode different from each other in sensing range, and receive radar signals reflected by an object; a data generation unit configured to generate first radar data corresponding to the first mode and second radar data corresponding to the second mode based on the reflected radar signals; and a sensing unit (200) configured to sense a weather condition while the vehicle is driving, based on the first radar data and the second radar data using a pre-trained model.

## Description

### CROSS-REFERENCE TO RELATED APPLICATION

This application claims the benefit of Korean Patent Application No. 10-2024-0173381 filed on Nov. 28, 2024, with the Korean Intellectual Property Office.

### TECHNICAL FIELD

The present disclosure relates to a device, method and computer program for sensing weather conditions using a radar device installed in a vehicle.

### BACKGROUND

With the advancement of automotive technology, the safety and reliability of autonomous vehicles and Advanced Driver Assistance Systems (ADAS) are becoming key elements of vehicle performance. Such systems are designed to recognize the surrounding environment of a vehicle by using various sensors, such as cameras, LiDAR, and radar, and to suppress potentially dangerous situations that may occur during driving. However, adverse weather conditions (e.g., rain, snow, fog) can degrade sensor performance and thus limit accurate recognition of the surrounding environment.

In particular, cameras may fail to clearly recognize objects when rain or snow adheres to a lens and the field of view is blurred. LiDAR may have difficulty performing accurate distance measurement due to scattering and absorption of light. Meanwhile, a radar, which operates based on electromagnetic waves, can provide relatively stable performance even in adverse weather conditions. However, excessively heavy rain or snow can weaken radar signals or increase noise, which may negatively affect sensing range and resolution.

Conventional technologies have mainly focused on improving performance of individual sensors or solving problems by fusing data from various sensors. However, limitations of each sensor still make it difficult to secure reliability in adverse weather conditions. In particular, due to the complexity of sensor fusion technology and uncertainty in its data, there is a need for development of improved technology capable of operating reliably even under adverse weather conditions.

### Prior art document/Patent document

Patent document 1: Japanese Patent Laid-open Publication No. 2020/193962

### SUMMARY

In view of the foregoing, the present disclosure is conceived to provide a method for accurately determining weather conditions even in adverse weather conditions by utilizing an in-vehicle radar.

Further, the present disclosure may propose a technology that uses radar data to precisely sense adverse weather conditions and enhances stability and reliability of an autonomous driving system through cooperation with other in-vehicle sensors.

The problems to be solved by the present disclosure are not limited to the above-described problems. There may be other problems to be solved by the present disclosure.

According to an exemplary embodiment, a device that senses weather condition using a radar device installed in a vehicle may include a transceiver configured to: transmit, through the radar device, radar signals to an outside of the vehicle based on a first mode or a second mode different from each other in sensing range, and receive radar signals reflected by an object; a data generation unit configured to generate first radar data corresponding to the first mode and second radar data corresponding to the second mode based on the reflected radar signals; and a sensing unit configured to sense a weather condition while the vehicle is driving, based on the first radar data and the second radar data using a pre-trained model.

According to another exemplary embodiment, a method for sensing weather condition using a radar device installed in a vehicle may include transmitting, through the radar device, radar signals to an outside of the vehicle based on a first mode or a second mode different from each other in sensing range; receiving radar signals reflected by an object; generating first radar data corresponding to the first mode and second radar data corresponding to the second mode based on the reflected radar signals; and sensing a weather condition while the vehicle is driving, based on the first radar data and the second radar data using a pre-trained model.

According to another exemplary embodiment, a computer program stored in a computer storage medium including a sequence of instructions for sensing weather conditions using a radar device installed in a vehicle, wherein the computer program includes a sequence of instructions that, when executed by a computing device, cause the computer device to: transmit, through the radar device, radar signals to an outside of the vehicle based on a first mode or a second mode different from each other in sensing range; receive radar signals reflected by an object; generate first radar data corresponding to the first mode and second radar data corresponding to the second mode based on the reflected radar signals; and sense a weather condition while the vehicle is driving, based on the first radar data and the second radar data using a pre-trained model.

This summary is provided by way of illustration only and should not be construed as limiting in any manner. Besides the above-described exemplary embodiments, there may be additional exemplary embodiments that become apparent by reference to the drawings and the detailed description that follows.

According to an embodiment of the present disclosure, the limitations of each mode may be complemented by fusing data collected at various distances through a first mode and a second mode that differ in sensing range. This approach may contribute to improving sensing accuracy by collecting appropriate data based on weather conditions.

Further, a pre-trained deep learning-based model can effectively sense various weather conditions, such as rainy, snowy, and clear weather conditions, using radar data. By analyzing characteristics of radar data generated under each weather condition, the model can achieve accurate weather classification and provide higher accuracy and efficiency compared to conventional sensor data processing methods. Thus, safety of autonomous vehicles can be significantly improved.

Further, by preprocessing radar data, data quality may be improved and noise may be effectively removed, which is an important factor in increasing reliability of weather sensing. Also, by generating multi-frame sequence data based on the preprocessed data, temporal stability of the data may be secured, and learning and prediction performance of a weather sensing model may be improved.

Moreover, by dynamically adjusting parameters of a radar device and other in-vehicle sensors according to the sensed weather conditions, sensor performance degradation may be suppressed and system stability may be enhanced. By optimizing operations of sensors according to the weather conditions, operational efficiency and safety of autonomous vehicles may be improved.

Furthermore, the present disclosure may increase the efficiency of weather sensing by performing a series of processes, such as sensing, preprocessing, data generation, and weather sensing, by using an in-vehicle radar, and may be applicable to various vehicle systems. Also, the present disclosure ensures stable performance even in adverse weather conditions.

According to the present disclosure, an autonomous vehicle can accurately recognize road conditions regardless of weather conditions, thereby suppressing accident risks in advance and maximizing operational efficiency. As a result, the reliability and market competitiveness of autonomous driving technology can be significantly improved.

### BRIEF DESCRIPTION OF THE DRAWINGS

In the detailed description that follows, embodiments are described as illustrations only since
various changes and modifications will become apparent to a person with ordinary skill in the art from the following detailed description. The use of the same reference numbers in different figures indicates similar or identical items.
**FIG. 1** is a system diagram of a weather sensing system according to an embodiment of the present disclosure.
**FIG. 2** is a configuration diagram of a sensing device according to an embodiment of the present disclosure.
**FIG. 3** is a flowchart showing a method for sensing weather conditions using a radar device installed in a vehicle according to an embodiment of the present disclosure.
**FIG. 4** is a diagram illustrating a deep learning model for analyzing weather conditions according to an embodiment of the present disclosure.

### DETAILED DESCRIPTION

Hereinafter, embodiments of the present disclosure will be described in detail with reference to the accompanying drawings to be readily implemented by a person with ordinary skill in the art to which the present disclosure belongs. However, it is to be noted that the present disclosure is not limited to the example embodiments but can be embodied in various other ways. In the drawings, parts irrelevant to the description are omitted in order to clearly explain the present disclosure, and like reference numerals denote like parts through the whole document.

Through the whole document, when a member is said to be located "on" another member, this includes not only the case where the member is in contact with the other member, but also the case where another member exists between the two members.

Throughout this document, the term "connected to" may be used to designate a connection or coupling of one element to another element and includes both an element being "directly connected" another element and an element being "electronically connected" to another element via another element. Further, it is to be understood that the term "comprises or includes" and/or "comprising or including" used in the document means that one or more other components, steps, operation and/or the existence or addition of elements are not excluded from the described components, steps, operation and/or elements unless context dictates otherwise; and is not intended to preclude the possibility that one or more other features, numbers, steps, operations, components, parts, or combinations thereof may exist or may be added.

As used through the whole document, the terms "about", "substantially", etc. are used to mean at or close to that value when manufacturing and material tolerances inherent to the stated meaning are presented, it is used to prevent unscrupulous infringers from taking unfair advantage of disclosures in which precise or absolute figures are mentioned to help understanding of the present disclosure. The term "step of" as used through the whole document does not mean "step for."

Throughout the whole document, the term "combination(s) of" included in Markush type description means mixture or combination of one or more components, steps, operations and/or elements selected from a group consisting of components, steps, operation and/or elements described in Markush type and thereby means that the disclosure includes one or more components, steps, operations and/or elements selected from the Markush group.

Through the whole document, references to "A and/or B" mean "A or B, or A and B."

Throughout this document, the term "unit" includes a unit implemented by hardware and/or a unit implemented by software. As examples only, one unit may be implemented by two or more pieces of hardware or two or more units may be implemented by one piece of hardware.

In the present specification, some of operations or functions described as being performed by a device may be performed by a server connected to the device. Likewise, some of operations or functions described as being performed by a server may be performed by a device connected to the server.

Hereinafter, embodiments of the present disclosure will be described in detail with reference to the accompanying drawings. However, the present disclosure may not be limited to these implementations, examples, and drawings.

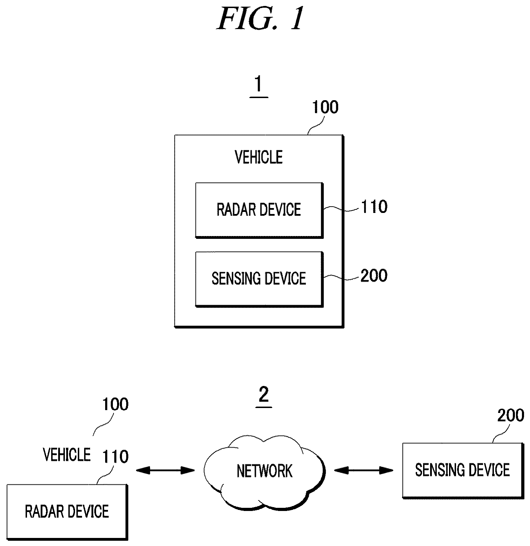

**FIG. 1** is a system diagram of a weather sensing system according to an embodiment of the present disclosure.

**FIG.1** is a diagram illustrating a configuration of the weather sensing system using a radar device installed in a vehicle according to the present disclosure. The components of the present disclosure and their relationships will be described in detail below with reference to **FIG. 1****.**

A vehicle 100 is a means of transportation with an autonomous driving system or a driver assistance system. It may include various sensors and devices to recognize the surrounding environment while driving on a road and to provide necessary driving information. A radar device 110 for sensing the surrounding environment of the vehicle is mounted outside the vehicle 100.

The radar device 110 may be installed in the vehicle 100 to transmit high-frequency signals and receive reflected signals, thereby providing information about the external environment of the vehicle 100.

The radar device 110 may support a plurality of operation modes, e.g., a long range (LR) mode and a short range (SR) mode, that differ in sensing range and resolution and may collect data at various distances. The multi-mode operation enables more accurate sensing of weather conditions around the vehicle.

A sensing device 200 may analyze weather conditions based on data collected by the radar device 110 and may provide analysis results to the systems of the vehicle 100. The sensing device 200 may be implemented as follows. For example, in a system 1, the sensing device 200 may be installed in the vehicle 100 and may directly receive radar signals from the radar device 110 connected to the vehicle 100. In another example, in a system 2, the sensing device 200 may receive radar data from the radar device 110 connected to the vehicle 100 via an external communication network.

The sensing device 200 may process transmitted and received radar signals to generate first radar data (corresponding to a first mode, *i.e.,* LR mode) and second radar data (corresponding to a second mode, *i.e*., SR mode) according to different sensing ranges, and may classify weather conditions during driving into rainy, snowy, and clear weather conditions by analyzing the radar data using a pre-trained deep learning model.

In particular, the sensing device 200 may perform a process of preprocessing data provided from the radar device 110. For example, the sensing device 200 may improve data quality and reliability by performing normalization and squaring to the first radar data and applying a zero-mean process and a predetermined function to the second radar data.

Further, the preprocessed data may be configured as sequence data, thereby ensuring temporal stability in sensing weather conditions.

The vehicle 100, the radar device 110, and the sensing device 200 may operate organically to provide information about a driving environment of the vehicle, thereby enabling optimization of the sensors and vehicle systems according to weather conditions. The present disclosure makes it possible to greatly improve the stability and reliability of an autonomous driving system and a driver assistance system through interactions among these components.

**FIG. 1** illustrates a basic structure of how the vehicle 100, the radar device 110, and the sensing device 200 of the present disclosure interact with each other, process data, and sense weather conditions. Detailed operations and processing procedures of the respective components will be described below with reference to the subsequent drawings.

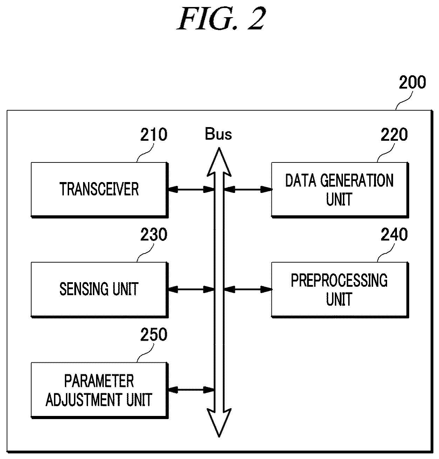

**FIG. 2** is a configuration diagram of a sensing device according to an embodiment of the present disclosure, and shows the internal components of the sensing device and their operations in detail.

**FIG. 2** illustrates a structure in which the internal components of the sensing device 200 of the present disclosure operate organically to sense a driving environment of the vehicle and respond to weather conditions. Detailed operations and implementations of the respective components will be described below with reference to the subsequent drawings.

Referring to **FIG. 2****,** the sensing device 200 may include a transceiver 210, a data generation unit 220, a sensing unit 230, a preprocessing unit 240, and a parameter adjustment unit 250. Interactions among these components will be described below with reference to **FIG. 2****.**

The transceiver 210 may be responsible for interfacing with the radar device 110 installed in the vehicle 100, and may control transmission and reception of radar signals. The transceiver 210 may transmit, through the radar device 110, radar signals to the outside of the vehicle 100 in a first mode LR and a second mode SR that differ in sensing range, and may receive radar data reflected by an object and deliver the radar data to the data generation unit 220.

For example, the first mode LR may be suitable for medium-to-long range sensing, providing a long sensing range with potentially lower resolution and a narrower field of view. The second mode SR may be suitable for short range sensing, providing a short sensing range with a wide field of view and high resolution.

The transceiver 210 may process radar signals transmitted and received according to the modes and may deliver radar data to the data generation unit 220.

The data generation unit 220 may generate first radar data corresponding to the first mode and second radar data corresponding to the second mode based on data delivered from the transceiver 210.

For example, the data generation unit 220 may process time-series data received from the radar device 110 by using 2D FFT to generate a Range-Doppler Map (RDM), and such data may be classified into the LR mode and the SR mode based on the chirp bandwidth setting.

According to the present disclosure, RDM data of the first mode and the second mode may be acquired from the radars. Thus, it is possible to accurately determine adverse weather conditions using a deep learning model. In a data logging process, it may be desirable to collect normal, snowy, and rainy weather data on a standard road to minimize the influence from terrain and environment.

The data generation unit 220 may extract attributes, such as signal intensity, Doppler shift, and velocity distribution, from the respective data and may deliver the attracted attributes to the preprocessing unit 240. The generated attribute data may be used to analyze weather conditions around the vehicle and may undergo preprocessing for accurate analysis.

Prior to describing the preprocessing process, characteristics of weather environments will be described from a radar perspective.

In clear weather, effects caused by weather hardly appear in radar signals. Since there is no precipitation, such as rain or snow, in the air, the radar map predominantly shows only clutter (signal reflection caused by terrain, buildings, etc.) originating from the ground. Such clutter signals may be concentrated near zero velocity in the Doppler axis, and their signal intensity may remain low. Thus, the radar map in clear weather appears similar to background noise rather than showing specific weather signal patterns.

During snowfall, the radar map may vary depending on characteristics of snowflakes, which are composed of ice crystals with various sizes and densities and have low reflectivity of electromagnetic waves due to air layers contained therein. Accordingly, when it snows, radar signal intensity may appear relatively weak. Further, since snowflakes are greatly influenced by wind and move in various directions and speeds while falling, signals may be dispersed across a wide range in the Doppler axis. As a result, the radar map in snowy weather may exhibit a wide velocity distribution of signals.

During rainfall, water-based droplets exist in the air. Since their size and density are relatively uniform, they fall at a constant speed due to gravity and air resistance, resulting in radar Doppler speeds being concentrated in a narrow range. Further, since raindrops reflect electromagnetic waves well, radar signal intensity appears strong in the RDM, forming clear peaks. Therefore, in rainy weather conditions, both signal strength and concentration increase in the radar map.

As described above, since the bandwidth is large in the second mode, and, thus, the sensing range decreases while the range resolution increases. However, an increase in bandwidth may also increase noise, which degrades the SNR. In contrast, since the bandwidth is small in the first mode, and, thus, the sensing range increases while the range resolution decreases. Therefore, depending on weather characteristics, the second mode may be suitable for precise classification of normal, snowy, and rainy weather conditions with high resolution, while the first mode may be suitable for supporting and verifying the sensing results of the second mode over a long range.

The preprocessing unit 240 may preprocess radar data provided by the data generation unit 220 to improve data quality, and may perform the following processes.

For example, the preprocessing unit 240 may apply normalization and squaring to the first radar data (corresponding to the LR mode) to minimize noise and emphasize differences between signals.

Specifically, since the first mode is suitable for longer range measurement, it is possible to support and verify the sensing results of the second mode. Radar data corresponding to the first mode may be preprocessed by normalizing power values of the RDM between 0 and 1 and then squaring them to broaden the data distribution. Although small values become smaller as in the second mode, larger values are relatively amplified, resulting in greater differences. Thus, a larger area of the RDM can be used to effectively verify the determination results of the second mode.

In another example, the preprocessing unit 240 may perform a zero-mean process and apply a predetermined function to the second radar data (corresponding to the SR mode) to clarify the data distribution.

Specifically, in order to emphasize the characteristics of snow and rain, RDM data in the second mode may be preprocessed to polarize the data and increase contrast when compared as an image. For example, a zero-mean process may be performed on the power values of the RDM, and a sigmoid function may be applied, followed by normalization between 0 and 1 to polarize the data. The preprocessed radar data corresponding to the second mode may more clearly represent the velocity distribution with respect to range, and may reveal features corresponding to each weather condition. Accordingly, since small values become smaller and large values become larger, weather classification may be facilitated.

In yet another example, the preprocessing unit 240 may generate sequence data composed of at least five frames based on the preprocessed data, and may perform additional preprocessing thereon to reflect temporal characteristics.

In this regard, radar scintillation refers to a phenomenon in which radar signal strength suddenly fluctuates irregularly due to irregular variations in the atmosphere, and occurs when irregularly shaped targets are present. Since this phenomenon more frequently occurs in adverse weather conditions due to abrupt changes in the radar cross section (RCS), it may be desirable in the present disclosure to use sequence data instead of single-frame data in order to suppress radar scintillation. In summary, an input preprocessing method may be adopted to increase data stability and reliability by using sequence data composed of at least five frames. In this method, each frame may include two channels of preprocessed data, in which data of the second mode are polarized using a sigmoid function and data of the first mode are squared to widen the data distribution.

Therefore, the deep learning input data may have a format of 5×512×64, where 5 is the number of frames, 512 is the size of a range axis, and 64 is the size of a Doppler axis. The last dimension may include two channels because radar data of both the first and the second modes are used together.

Through this preprocessing process, the sensing device 200 may analyze weather conditions based on more reliable data.

The sensing unit 230 may sense and analyze weather conditions while the vehicle is driving, based on the preprocessed data.

For example, the sensing unit 230 may sense weather conditions, such as rainy, snowy, and clear weather conditions, during driving, based on the first radar data and the second radar data, using a pre-trained deep learning model. Specifically, the sensing unit 230 may use a model including a convolutional neural network (CNN) and a gated recurrent unit (GRU) to learn and analyze spatial and temporal patterns.

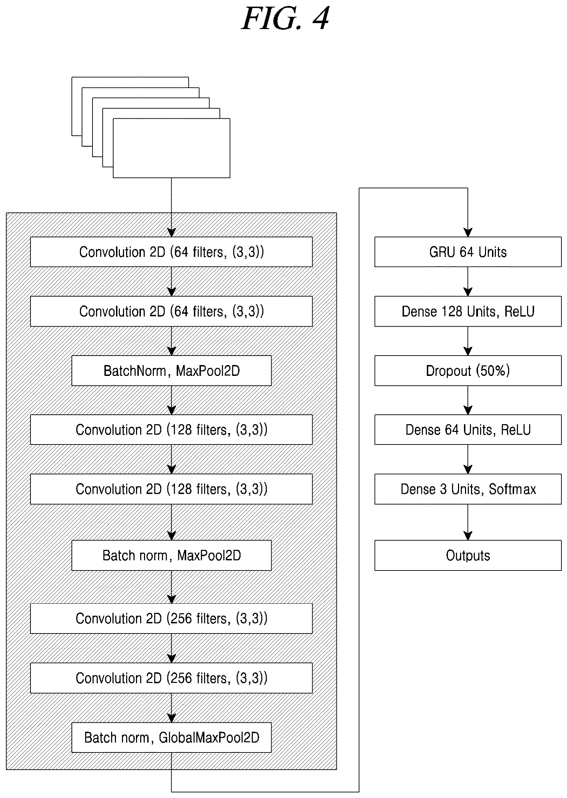

The deep learning model will be described below with reference to **FIG. 4. FIG. 4** is a diagram illustrating a deep learning model for analyzing weather conditions according to an embodiment of the present disclosure.

The sensing unit 230 may sense weather conditions during driving using a deep learning-based analysis model. To provide highly reliable results even under various adverse weather environments, the sensing unit 230 may adopt a deep learning structure including the CNN and the GRU. Hereafter, a deep learning-based analysis process of the sensing unit 230 will be described in detail with reference to **FIG. 4****.**

### 1. Overview of Input Data and Structure

The sensing unit 230 may use, as input, sequence data composed of at least five frames, and each frame represents 512 × 64-size data. The input data may include SR (short range mode) data and LR (long range mode) data generated by the radar device 110, and may be divided into two channels. Accordingly, the sensing unit 230 can learn spatial-temporal features to analyze weather conditions.

### 2. Spatial Feature Extraction Using CNN

A first stage of the deep learning model may be performed by a CNN. The CNN may process the input data through a plurality of layers to extract spatial features of an image. The CNN structure illustrated in the drawing is as follows.

First convolution layer: Input data are processed using 64 filters and a (3, 3) kernel.

Second convolution layer and batch normalization: The same filters are applied, followed by BatchNorm and MaxPool2D to reduce the data size and improve learning efficiency.

Intermediate and final layers: The number of filters is gradually increased (*e.g*., 128 and 256) to extract higher-dimensional features. In a final stage, GlobalMaxPool2D is performed to convert spatial features into vectors.

Through this process, the CNN may learn the shape and structure of each sequence image and extract key spatial patterns related to weather conditions.

### 3. Temporal Feature Learning Using GRU

The spatial feature vectors extracted by the CNN may be input into a GRU. The GRU is a type of recurrent neural network (RNN) optimized for learning temporal dependencies from sequence data. The major functions of the GRU are as follows.

Learning of temporal relationship: Temporal patterns related to weather conditions are learned based on sequence data of each frame, which helps in understanding changes in characteristics of weather conditions, such as rainy, snowy, and clear weather conditions, over time.

Efficient learning: The GRU provides faster learning speed and processes long-term dependencies more effectively than a conventional RNN, making it suitable for processing sequence data, such as RDM data.

### 4. Classification Using Fully-Connected Layer and Softmax

The feature vectors learned in the GRU are delivered to a fully connected (FC) layer, which is configured to convert data into class-wise probabilities.

FC layer: A first FC layer is composed of 128 neurons, and learns non-linear characteristics using a ReLU activation function. A second FC layer is composed of 64 neurons, and employs a ReLU activation function.

Output layer: The input data are classified into one of three weather conditions, such as normal, rainy, and snowy weather conditions, by applying three neurons with a Softmax activation function.

### 5. High Accuracy of Analysis under Adverse Weather Condition

The deep learning model of the sensing unit 230 may sense weather conditions with high accuracy even under various adverse weather environments. The CNN may enhance data reliability by learning spatial patterns, while the GRU may effectively sense changes caused by adverse weather conditions by identifying temporal relationships in sequence data. Accordingly, the sensing unit may analyze weather conditions in real time and support appropriate responses of vehicle systems.

The accompanying drawing illustrates the deep learning structure of the present disclosure in a block diagram format.

The CNN layers shown on the left describe a process of processing input data and extracting spatial features, while the GRU and FC layers shown on the right describe a process of learning temporal relationships and classifying weather conditions based on the extracted feature vectors.

This structure enables highly reliable weather analysis using radar data in a vehicle driving environment.

By learning RDM patterns generated under various adverse weather environments, the deep learning model may contribute to improving accuracy in weather determination and enhancing reliability of the autonomous driving system. In particular, this approach enables effective handling of complex weather conditions.

In relation to deep model training, a cross-entropy loss function may be used to classify three classes for three types of input data. Training may be performed for 30 epochs using a mini-batch size of 64, and optimization may be performed using an ADAM optimizer.

In another example, the sensing unit 230 may classify weather conditions into one of three categories based on the data to support safe driving of the vehicle.

The parameter adjustment unit 250 may dynamically adjust a parameter of the radar device 110 and other in-vehicle sensors based on weather conditions sensed by the sensing unit 230.

For example, the parameter adjustment unit 250 may adjust the radar's transmission and reception intensity or change the sensitivity of other sensors in rainy or snowy weather conditions to minimize sensor degradation.

Such dynamic parameter adjustment may improve the stability of vehicle systems and maintain optimal performance even under various adverse weather environments.

In summary, the transceiver 210 may collect data from the radar device 110 through communication with the radar device 110, and the data generation unit 220 may generate data based on the collected data. The preprocessing unit 240 may refine and sequence the generated data, and the sensing unit 230 may analyze the data to classify weather conditions. The parameter adjustment unit 250 may optimize system operation based on the sensed weather conditions.

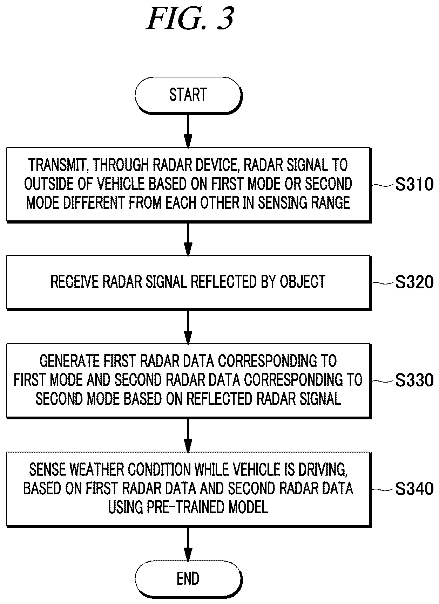

**FIG. 3** is a flowchart showing a method for sensing weather conditions using a radar device installed in a vehicle according to an embodiment of the present disclosure.

Referring to **FIG. 3****,** the method for sensing weather conditions by the sensing device 200 includes the processes time-sequentially performed according to an embodiment illustrated in **FIG. 1** to **FIG. 4****.** Therefore, the descriptions of the processes may also be applied to the method for sensing weather conditions by the sensing device 200 according to the embodiment illustrated in **FIG. 1** to **FIG. 4** even though they are omitted hereinafter.

In a process S310, the sensing device 200 may transmit, through a radar device, radar signals to the outside of a vehicle in a first mode or a second mode different from each other in sensing range.

In a process S320, the sensing device 200 may receive radar signals reflected by an object.

In a process S330, the sensing device 200 may generate first radar data corresponding to the first mode and second radar data corresponding to the second mode based on the reflected radar signals.

In a process S340, the sensing device 200 may sense weather conditions while the vehicle is driving, based on the first radar data and the second radar data using a pre-trained model.

In the descriptions above, the processes S310 to S340 may be divided into additional processes or combined into fewer processes depending on an embodiment. In addition, some of the processes may be omitted and the sequence of the processes may be changed if necessary.

**The** method for sensing a weather condition using a radar device installed in a vehicle described above with reference to FIG. 1 to FIG. 4 can be implemented in a computer program stored in a medium to be executed by a computer or a storage medium including instructions codes executable by a computer. Also, the method for sensing a weather condition using a radar device installed in a vehicle described above with reference to FIG. 1 to FIG. 4 can be implemented in a computer program stored in a medium to be executed by a computer.

A computer-readable medium can be any usable medium which can be accessed by the computer and includes all volatile/non-volatile and removable/non-removable media. Further, the computer-readable medium may include all computer storage and communication media. The computer storage medium includes all volatile/non-volatile and removable/non-removable media embodied by a certain method or technology for storing information such as computer-readable instruction code, a data structure, a program module or other data. The communication medium typically includes the computer-readable instruction code, the data structure, the program module, or other data of a modulated data signal such as a carrier wave, or other transmission mechanism, and includes a certain information transmission medium.

The functionality of the elements disclosed herein may be implemented using circuitry or processing circuitry which includes general purpose processors, special purpose processors, integrated circuits, ASICs ("Application Specific Integrated Circuits"), conventional circuitry and/or combinations thereof which are configured or programmed to perform the disclosed functionality. Processors are considered processing circuitry or circuitry as they include transistors and other circuitry therein.

In the disclosure, the circuitry, units, or means are hardware that carry out or are programmed to perform the recited functionality. The hardware may be any hardware disclosed herein or otherwise known which is programmed or configured to carry out the recited functionality.

When the hardware is a processor which may be considered a type of circuitry, the circuitry, means, or units are a combination of hardware and software, the software being used to configure the hardware and/or processor.

The above description of the present disclosure is provided for the purpose of illustration, and it would be understood by those skilled in the art that various changes and modifications may be made without changing technical conception and essential features of the present disclosure. Thus, it is clear that the above-described embodiments are illustrative in all aspects and do not limit the present disclosure. For example, each component described to be of a single type can be implemented in a distributed manner. Likewise, components described to be distributed can be implemented in a combined manner.

The scope of the present disclosure is defined by the following claims rather than by the detailed description of the embodiment. It shall be understood that all modifications and embodiments conceived from the meaning and scope of the claims and their equivalents are included in the scope of the present disclosure.

### Explanation of codes

100: Vehicle
110: Radar device
200: Sensing device

## Claims

1. A device that senses weather conditions using a radar device installed in a vehicle, comprising:
a transceiver configured to:
transmit, through the radar device, radar signals to an outside of the vehicle based on a first mode or a second mode different from each other in sensing range, and
receive radar signals reflected by an object;
a data generation unit configured to generate first radar data corresponding to the first mode and second radar data corresponding to the second mode based on the reflected radar signals; and
a sensing unit configured to sense a weather condition while the vehicle is driving, based on the first radar data and the second radar data using a pre-trained model.

2. The device of Claim 1,
wherein the first mode is suitable for medium-to-long range sensing, and
the second mode is suitable for short range sensing shorter than the medium-to-long range sensing.

3. The device of Claim 1, further comprising:
a preprocessing unit configured to preprocess the first radar data and the second radar data,
wherein the sensing unit is further configured to sense the weather condition based on the preprocessed first radar data and the preprocessed second radar data.

4. The device of Claim 3,
wherein the preprocessing unit is further configured to perform preprocessing by applying normalization and squaring to the first radar data, and by applying a zero-mean process and a predetermined function to the second radar data.

5. The device of Claim 4,
wherein the preprocessing unit is further configured to generate sequence data including at least five frames based on the preprocessed first radar data and the preprocessed second radar data, and
the sensing unit is further configured to sense the weather condition based on the sequence data.

6. The device of Claim 1,
wherein the sensing unit is further configured to sense the weather condition as one of rainy, snowy or clear weather conditions.

7. The device of Claim 1, further comprising:
a parameter adjustment unit configured to adjust a parameter of the radar device or a parameter of other in-vehicle sensors based on the sensed weather condition.

8. A method for sensing a weather condition using a radar device installed in a vehicle, comprising:
transmitting, through the radar device, radar signals to an outside of the vehicle based on a first mode or a second mode different from each other in sensing range;
receiving radar signals reflected by an object;
generating first radar data corresponding to the first mode and second radar data corresponding to the second mode based on the reflected radar signals; and
sensing a weather condition while the vehicle is driving, based on the first radar data and the second radar data using a pre-trained model.

9. A computer program stored in a non-transitory computer storage medium including a sequence of instructions for sensing a weather condition using a radar device installed in a vehicle,
wherein the computer program includes a sequence of instructions that, when executed by a computing device, cause the computing device to:
transmit, through the radar device, radar signals to an outside of the vehicle based on a first mode or a second mode different from each other in sensing range;
receive radar signals reflected by an object;
generate first radar data corresponding to the first mode and second radar data corresponding to the second mode based on the reflected radar signals; and
sense a weather condition while the vehicle is driving, based on the first radar data and the second radar data using a pre-trained model.
